# EUROPÄISCHE PATENTSCHRIFT

(11) **EP 0 974 529 B1**
(45) Veröffentlichungstag und Bekanntmachung des Hinweises auf die Patenterteilung: **05.02.2003**
(21) Anmeldenummer: 98113447.1
(22) Anmeldetag: 18.07.1998
(51) Int. Cl.: B65D 51/26, B29C 45/44

(54) **Stopfen mit Spiralniederhalter**
Stopper with helical article retainer
Bouchon avec organe hélicoidal de retenue des articles

(43) Veröffentlichungstag der Anmeldung: 26.01.2000
(73) Patentinhaber: GAPLAST GmbH, D-82442 Altenau (DE)
(72) Erfinder: Kneer, Roland, 82490 Farchant (DE)
(74) Vertreter: Flosdorff, Jürgen, Dr.

(56) Entgegenhaltungen:
- EP-A- 0 798 228
- WO-A-97/27037
- DE-B- 1 175 146
- FR-A- 1 213 774
- US-A- 5 415 307

## Beschreibung

Die Erfindung betrifft einen Stopfen gemäß dem Oberbegriff des Anspruchs 1 und eine Spritzgußform für einen derartigen Stopfen gemäß Anspruch 4.

Ein Stopfen der betrachteten Art hat im allgemein an dem Deckelteil außerdem eine den Rand der Behälteröffnung umgreifende Umfangswand, die zudem mit einem abreißbaren Sicherungsring verbunden sein kann, der beispielsweise mit angeformten Haken einen ringförmigen Vorsprung des Behälters untergreifen kann. Außerdem kann eine ringförmige Kammer radial innerhalb der Olive an dem Deckelteil angeformt sein, die eine Kammer für Trockenmittel bildet. Der erfindungsgemäße Stopfen muß jedoch nicht unbedingt mit der umgreifenden Umfangswand und der Trockenmittelkammer versehen sein.

Der Spiralniederhalter hält in dem Behälter befindliche Tabletten mit leichtem Anpreßdruck in Anlage aneinander, so daß sie beim Transport des Behälters nicht aneinander anstoßen und zerbrechen können. Damit der Spiralniederhalter hierzu die erforderliche Festigkeit hat, haben die ihn bildenden Spiralstege, an deren freien Ende der gemeinsame Abschlußring angeformt ist, an einer Seite die oben erwähnte konvexe Querschnittsform, während die andere Seite flach ausgebildet ist. "Flach" bedeutet allerdings nicht, daß diese Seite der Spiralstege vollständig eben ist, da der Spiralniederhalter insgesamt eine runde Form hat, in der die Spiralstege liegen. Diese runde Form weicht an der "flachen Seite" der Spiralstege um einen kleinen Winkel von einer Zylinderform ab, damit der diese Fläche bildende Schieber in der Spritzgußform in axialer Richtung des Stopfen zurückziehbar ist, wie oben erwähnt ist.

Bei den bisher bekannten Stopfen der betrachteten Art ist der Spiralniederhalter radial innerhalb der Olive an dem Deckelteil angesetzt, und die flache Kontur der Spiralstege befindet sich an der inneren Umfangswand des Spiralniederhalters. Dabei hat die Innenseite des Spiralniederhalters eine sich von dem Deckelteil zu ihrem freien Ende hin leicht konisch erweiternde Form.

Aus der EP-A-O 798 228 ist ein Stopfen für einen Behälter mit den Merkmalen des Oberbegriffs des Patentanspruchs 1 bekannt. Bei diesem Stopfen liegen die flachen Konturen der Spiralstege an der Innenseite des Spiralniederhalters. Die Entformung dieses bekannten Stopfens ist schwierig.

Stopfen der betrachteten Art sind Massenprodukte, deren Herstellungskosten möglichst gering sein sollen. Der vorliegenden Erfindung lag daher die Aufgabe zugrunde, einen Stopfen der betrachteten Art so weiter zu entwickeln, daß seine Herstellungskosten verringert sind.

Außerdem soll eine Spritzgußform angegeben werde, mit der sich ein billigerer Stopfen herstellen läßt.

Diese Aufgaben werden erfindungsgemäß durch die Merkmale der Patentansprüche 1 und 4 gelöst.

Vorteilhafte Ausgestaltungen der Erfindung sind in den Unteransprüchen gekennzeichnet.

Die Erfindung sieht vor, daß der Spiralniederhalter an der Olive angeformt ist und daß sich die flachen Konturen der Spiralstege an der äußeren Umfangswand des Spiralniederhalters befinden. Bei dieser Ausbildung wird Kunststoffmaterial für den Stopfen eingespart, da der Spiralniederhalter erheblich kürzer ausfällt, wobei die Verringerung der verwendeten Materialmenge zu einer signifikanten Senkung der Kosten des Stopfens führt.

Dabei ist wesentlich, daß sich die flachen Konturen der Spiralstege an der äußeren Umfangswand des Spiralniederhalters befinden, damit die zum Entformen notwendige leicht konische Form die Außenseite des Spiralniederhalters bildet. Dies bedeutet, daß sich die Außenkontur des Spiralniederhalters von der Olive zum freien Ende hin leicht konisch verjüngt, während der Spiralniederhalter bei den bisher bekannten Stopfen, bei denen sich die flache Kontur an der Innenseite des Spiralniederhalters befindet, zum freien Ende leicht konisch verbreitert.

Die einstückig an das Deckelteil angeformte Anordnung aus Olive und Spiralniederhalter hat an der Außenseite die umlaufende Ringwulst und an der Innenseite die gewölbten Konturen der Spiralstege. Dabei besteht das Problem, wie dieser ringförmige Ansatz des Deckelteils in der Spritzgußform entformt werden kann.

Dies wird erfindungsgemäß dadurch gelöst, daß nacheinander an der Innenseite und an der Außenseite eine Zwangsentformung stattfindet. Hierzu enthält die erfindungsgemäße Spritzgußform zur Bildung der Außenkontur des Spiralniederhalters einen Schieber mit konischer Innenfläche, der in einem radial äußeren weiteren Schieber sitzt, der die Außenkontur des Ringansatzes mit der umlaufenden Ringwulst bildet. Die Innenkontur des Ringansatzes und des anschließenden Spiralniederhalters ist von einem gemeinsamen Schieber gebildet.

Bei der Entformung wird zunächst der die konische Außenkontur begrenzende Schieber in axialer Richtung des Stopfens zurückgezogen, woraufhin der innere Schieber unter radialer Aufweitung des Spiralniederhalters zurückziehbar ist. Danach wird der die Olive begrenzende Schieber zurückgezogen, wobei die Olive radial nach innen gezwängt wird.

In weiterer Ausgestaltung der Erfindung wird vorgeschlagen, daß der übergangsbereich von dem Ringansatz zum Spiralniederhalter schräg einwärts verläuft. Dies kann in der Weise geschehen, daß die äußere Umfangsfläche des Spiralniederhalters im Anschluß an den übergangsbereich im wesentlichen mit der Innenfläche des Ringansatzes fluchtet.

Nach einem weiteren Vorschlag der Erfindung können an dem unteren Abschlußring mehrere über den Umfang bevorzugt gleichmäßig verteilte radial innere Vorsprünge angeformt sein, damit der Spiralniederhalter auch für Tabletten entsprechend kleineren Durchmessers verwendbar ist.

Um die Entformung weiter zu erleichtern, kann der untere Abschlußring des Spiralniederhalters eine Wellenform haben.

Da der Spiralniederhalter des erfindungsgemäßen Stopfens eine erheblich kürzere axiale Erstreckung hat als derjenige der bisher bekannten Stopfen, ist dessen Verformbarkeit verringert, so daß derselbe elastische Anpreßdruck entweder mit Spiralstegen kleinerer Querschnittsabmessungen erreichbar ist, oder durch eine geringere Anzahl der Spiralstege. Auch hierdurch läßt sich zusätzlich Material einsparen.

Es kommt hinzu, daß die bevorzugt vorgesehene Kammer für das Trockenmittel einen größeren Durchmesser haben kann, da nun hierzu auch der Platz zur Verfügung steht, den beim Stand der Technik der Spiralniederhalter radial innerhalb der Olive eingenommen hat. Dies hat den Vorteil, daß mehr Trockenmittel in der Kammer untergebracht werden kann und daß eine größere Körnung für das Trockenmittel einsetzbar ist.

Weitere Einzelheiten der Erfindung ergeben sich aus der nachfolgenden Beschreibung sowie anhand der Zeichnung. Dabei zeigen:
- Fig. 1: eine Ausführungsform des erfindungsgemäßen Stopfens zur Hälfte in einer Seitenansicht und zur Hälfte im Vertikalschnitt und
- Fig. 2: eine Darstellung zur Erläuterung der Entformung der Anordnung aus Olive und Spiralniederhalter bei dem erfindungsgemäßen Stopfen.

Der in den Figuren dargestellte Stopfen 1 enthält ein Deckelteil 2, an dem radial außen eine den Rand der Öffnung eines nicht dargestellten Behälters umgreifende Umfangswand 3 angeformt ist, die über Stege 4 mit einem Abreißring 5 verbunden ist, der mit inneren hakenförmigen Ansätzen 6 zur Originalitätssicherung des Behälterinhalts versehen ist.

Im Abstand von der Umfangswand 3 ist an dem Deckelteil 2 ein Ringansatz 7 angeformt, der an der Außenseite eine umlaufende Ringwulst 8 enthält, die im Klemmsitz in die Behälteröffnung eingreift und diese abdichtet. Radial innerhalb des Ringansatzes 7 ist eine weitere Ringwand 9 zur Bildung einer Trockenmittelkammer angeformt.

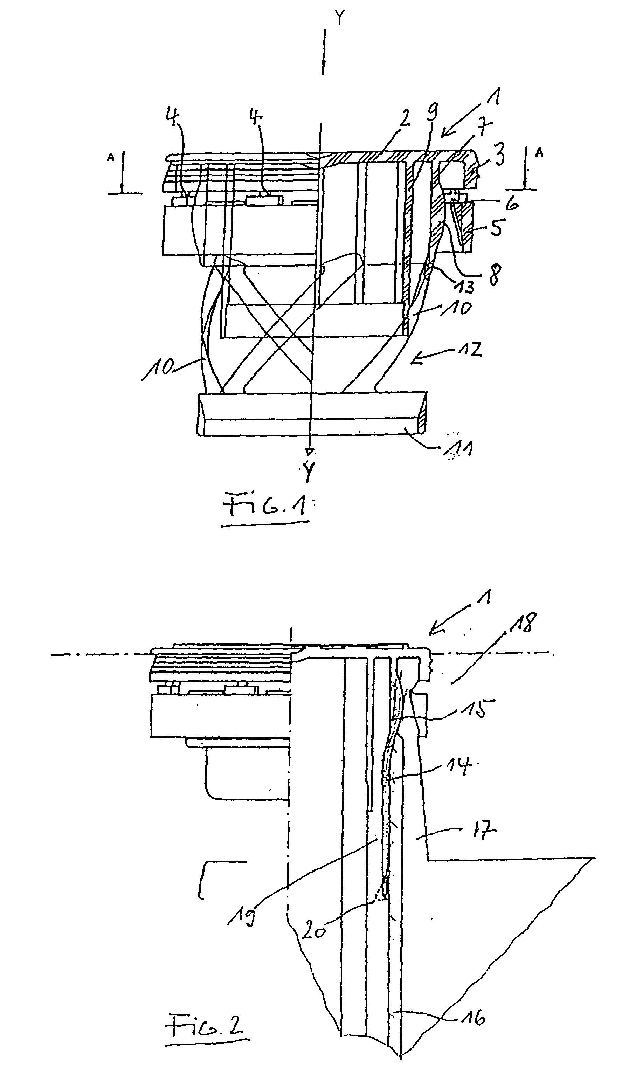

An dem freien Ende des Ringansatzes 7 sind Spiralstege 10 angeformt, die in einen Abschlußring 11 enden und mit diesem zusammen einen Spiralniederhalter 12 bilden. Der Abschlußring hat mehrere über seinen Umfang gleichmäßig verteilte radial innere Ansätze 20, wie in Fig. 2 gestrichelt angedeutet ist, damit der Spiralniederhalter auch für Tabletten kleineren Durchmessers verwendbar ist.

Die Spiralstege 10 haben radial außen eine flache Kontur, die allerdings nicht völlig eben ist, sondern in einer leicht konisch sich zum freien Ende verjüngenden Mantelebene des Spiralniederhalters liegt. Die Innenkonturen der Spiralstege 10 sind jeweils konvex gewölbt. Dies bedeutet, daß in allen zur Längsachse y des Stopfens 1 senkrechten Querschnittsebenen die Außenkonturen der Spiralstege 10 auf einem Kreis liegen, während ihre Innenkonturen konvex gewölbt sind.

Der Übergangsbereich 13 von dem ringförmigen Ansatz 7 zu den Stegen 10 verläuft schräg nach innen, so daß die Außenfläche 14 der Stege 10 im wesentlichen mit der Innenfläche 15 des ringförmigen Ansatzes 7 fluchtet, wie Figur 2 zeigt.

Die einstückig angeformte Anordnung aus dem ringförmigen Ansatz 7 mit der äußeren Ringwulst 8 und dem Spiralniederhalter 12 läßt sich mit axial bewegbaren Schiebern entformen, die in Fig. 2 weitgehend schematisch abgebildet sind.

Die konisch sich zum unteren Ende hin leicht verjüngende Außenkontur 14 der Stege 10 sowie des Abschlußringes 11 wird von einem Schieber 16 begrenzt, der innerhalb eines weiteren axial beweglichen Schiebers 17 sitzt, der die Außenkontur des ringförmigen Ansatzes 7 mit der äußeren Ringwulst 8 und auf der gegenüberliegenden Seite die Innenkontur der Umfangswand 3 und der hakenförmigen Ansätze 6 begrenzt. Die Außenkontur der Umfangswand 3 und des Abreißrings 5 sowie die Stege 4 werden von in radialer Richtung bewegbaren Schiebern 18 begrenzt. Die Innenkontur des Ringansatzes 7 und des Spiralniederhalters 12 wird von einem weiteren axial bewegbaren Schieber 19 begrenzt, der an seiner Innenseite die Außenwand der Ringwand 9 bildet.

Zur Entformung des Stopfens 1 werden zunächst der Schieber 16 in axialer Richtung sowie die Schieber 18 in radialer Richtung zurückgezogen. Daraufhin ist der Schieber 19 axial zurückziehbar, wobei der Spiralniederhalter 12 radial elastisch aufgeweitet wird. Anschließend wird der Schieber 17 axial zurückgezogen, wobei die "Olive" 7, 8 radial nach innen und der Abreißring 5 mit den hakenförmigen Ansätzen 6 radial nach außen gezwängt werden.

## Patentansprüche

1. Stopfen für einen Behälter mit einem Deckelteil (2), das vorzugsweise mit einer den Rand einer Behälteröffnung außen umgreifenden Umfangswand (3) verbunden ist, mit einem an dem Deckelteil (4) angeformten Ringansatz (7) mit an dessen Außenseite umlaufender Ringwulst (8) zum Eingriff in die Behälteröffnung und zu deren Abdichtung, und mit einem Spiralniederhalter (12) mit elastischen Spiralstegen (10), die an einer Breitseite eine flache Kontur und an der anderen Breitseite eine konvexe Kontur haben, wobei der Spiralniederhalter (12) an der Seite der flachen Konturen eine konische Form hat, und der Spiralniederhalter (12) an dem Ringansatz (7) angeformt ist,
**dadurch gekennzeichnet, daß** die flachen Konturen an der Außenseite des Spiralniederhalters (12) liegen.

2. Stopfen nach Anspruch 1,
**dadurch gekennzeichnet, daß** ein Übergangsbereich (13) von dem Ringansatz (7) zu den Spiralstegen (10) zur Symmetrieachse (Y) des Stopfens radial einwärts verläuft.

3. Stopfen nach Anspruch 2,
**dadurch gekennzeichnet, daß** eine äußere Mantelfläche (14) des Spiralniederhalters (12) im Anschluß an den Übergangsbereich (13) mit der Innenfläche (15) des Ringansatzes (7) fluchtet.

4. Spritzgußform für einen Stopfen nach einem der Ansprüche 1 bis 3, **dadurch gekennzeichnet, daß** zur Ausbildung des Ringansatzes (7) mit dem daran anschließenden Spiralniederhalter (12) ein gemeinsamer in axialer Richtung bewegbarer Schieber (19) für die konvexe Innenkontur der Spiralstege des Spiralniederhalters und getrennte axial bewegbare Schieber (16, 17) für die flache Außenkontur des Spiralniederhalters (12) und für die Außenkontur des Ringansatzes (7, 8) angeordnet sind.

## Claims

1. Stopper for a container with a lid portion (2), which is preferably connected to a peripheral wall (3) engaging externally around the edge of a container opening, an annular formation (7) formed on the lid portion (4) with an annular bead (8) extending around its outer surface for engagement in the container opening and for sealing it and a helical retainer (12) with elastic helical webs (10), which have a flat contour on one broad side and a convex contour on the other broad side, the helical retainer (12) having a conical shape on the side of the flat contours and the helical retainer (12) being formed on the annular formation (7), **characterised in that** the flat contours are situated on the outer surface of the spiral retainer (12).

2. Stopper as claimed in Claim 1, **characterised in that** a transition region (13) from the annular formation (7) to the helical webs (10) extends radially inwards with respect to the axis of symmetry (Y) of the stopper.

3. Stopper as claimed in Claim 2, **characterised in that** an outer surface (14) of the helical retainer (12) is in alignment with the inner surface (15) of the annular formation (7) adjoining the transition region (13).

4. Injection mould for a stopper as claimed in one of Claims 1 to 3, **characterised in that**, in order to form the annular formation (7) with the adjoining helical retainer (12) a common slider (19), which is movable in the axial direction, for the convex inner contour of helical webs of the helical retainer and separate axially movable sliders (16, 17) for the flat outer contour of the helical retainer (12) and for the outer contour of the annular formation (7, 8) are provided.

## Revendications

1. Bouchon pour un récipient avec une partie de couvercle (2) qui est reliée de préférence à une paroi périphérique (3) entourant le bord d'une ouverture de récipient à l'extérieur, avec un bout annulaire (7) rapporté par formage à la partie de couvercle (4) avec un bourrelet annulaire (8) s'étendant au côté extérieur de celui-ci pour l'engagement dans l'ouverture du récipient et pour l'étanchéité de celui-ci, et avec un organe de maintien bas en spirale (12) avec des nervures en spirale élastiques (10), qui présentent à un côté large un contour plat et à l'autre côté large un contour convexe, où l'organe de maintien bas en spirale (12), au côté des contours plats, a une forme conique, et l'organe de maintien bas en spirale (12) est rapporté par formage au bout annulaire (7),
**caractérisé en ce que** les contours plats se situent au côté extérieur de l'organe de maintien bas en spirale (12).

2. Bouchon selon la revendication 1, **caractérisé en ce qu'**une zone de transition (13) du bout rapporté annulaire (7) aux nervures en spirale (10) à l'axe de symétrie (Y) du bouchon s'étend radialement vers l'intérieur.

3. Bouchon selon la revendication 2, **caractérisé en ce qu'**une face d'enveloppe extérieure (14) de l'organe de maintien bas en spirale (12), à la suite de la zone de transition (13), est alignée avec la face intérieure (16) du bout rapporté annulaire (7).

4. Moule d'injection pour un bouchon selon l'une des revendications 1 à 3, **caractérisé en ce que**, pour la réalisation du bout rapporté annulaire (7) avec l'organe de maintien bas en spirale faisant suite (12) sont disposés un poussoir commun (19) déplaçable dans la direction axiale pour le contour intérieur convexe des nervures en spirale de l'organe de maintien bas en spirale et des poussoirs séparés, déplaçables axialement (16, 17) pour le contour extérieur plat de l'organe de maintien bas en spirale (12) et pour le contour extérieur du bout rapporté annulaire (7, 8).
